Europäisches Patentamt

European Patent Office

Office européen des brevets

(19)

(11) Veröffentlichungsnummer : **0 165 376**
**B1**

(12) **EUROPÄISCHE PATENTSCHRIFT**

(45) Veröffentlichungstag der Patentschrift :
07.06.89

(51) Int. Cl.⁴ : **B 60 T 17/18**, B 60 T 13/26,
B 60 G 17/04, F 15 B 21/00

(21) Anmeldenummer : 85102020.6

(22) Anmeldetag : 23.02.85

(54) Drucklufteinrichtung mit zwei Kreisen mit unterschiedlichen Drücken.

(30) Priorität : 22.06.84 DE 3422983

(43) Veröffentlichungstag der Anmeldung :
27.12.85 Patentblatt 85/52

(45) Bekanntmachung des Hinweises auf die Patenterteilung : 07.06.89 Patentblatt 89/23

(84) Benannte Vertragsstaaten :
DE FR GB IT

(56) Entgegenhaltungen :
DE—A— 2 449 178
DE—A— 2 452 188
DE—A— 3 232 127
FR—A— 2 511 960

(73) Patentinhaber : WABCO Westinghouse Fahrzeugbremsen GmbH
Am Lindener Hafen 21 Postfach 91 12 80
D-3000 Hannover 91 (DE)

(72) Erfinder : Petersen, Erwin, Dr.-Ing.
Fliederweg 22
D-3050 Wunstorf (DE)

(74) Vertreter : Schrödter, Manfred
WABCO Westinghouse Fahrzeugbremsen GmbH Am
Lindener Hafen 21 Postfach 91 12 80
D-3000 Hannover 91 (DE)

## Beschreibung

Die Erfindung betrifft eine Drucklufteinrichtung mit zwei Kreisen mit unterschiedlichen Drücken gemäß dem Oberbegriff des Patentanspruchs 1.

Eine solche zur Betätigung von pneumatisch steuerbaren und mit Druckluft beaufschlagbaren Druckluftverbrauchern dienende Einrichtung wird z. B. verwendet, um Druckluftverbraucher in einem ersten Kreis mit einem vergleichsweise hohen Vorratsdruck zu beaufschlagen, so daß schnelle Reaktionszeiten oder große Zuspannkräfte erreicht werden und Vorratsbehälter mit relativ geringen Abmessungen verwendbar sind. Für die pneumatische Ansteuerung der Druckluftverbraucher wird dabei in einem zweiten Kreis ein vergleichsweise niedriger Steuerdruck bevorzugt, wodurch eine relativ geringe Belastung der Steuerelemente erreicht wird.

Eine Einrichtung der eingangs genannten Art ist durch die DE-OS 31 33 963 bekannt. Diese bekannte Einrichtung besteht im wesentlichen aus folgenden Teilen :

In einer Druckmittel-Bremsanlage mit zwei Kreisen unterschiedlicher Drücke fördert ein Drucklufterzeuger Luft in einen Kreis mit einem höheren Druck. Die in Vorratsbehältern des Kreises mit dem höheren Druck verdichtete Luft wird über Druckleitungen und pneumatisch betätigbare Ventile Druckluftverbrauchern, die im vorliegenden Fall Bremszylinder sind, zugeführt. An den Kreis mit dem höheren Druck sind Ventile angeschlossen, die den höheren Druck auf einen niedrigeren Druck reduzieren und in einen Kreis mit einem niedrigeren Druck leiten können. An den Kreis mit dem niedrigeren Druck sind die Steuereingänge der in der Einrichtung vorhandenen Steuer- oder Relaisventile angeschlossen.

Bei dieser Einrichtung bestehen die Verbraucher aus Federspeicherzylindern, deren Vorratsleitungen an den Kreis mit dem höheren Druck angeschlossen sind. Während des Arbeitshubes wird das in den Federspeicherzylindern vorhandene Luftvolumen über die Relaisventile in die Atmosphäre abgeführt.

Die bekannte Einrichtung hat den Nachteil, daß das in den Verbrauchern gespeicherte, verdichtete Luftvolumen nur einmal genutzt und ohne Rückgewinnung in die Atmosphäre abgeleitet wird.

Der Erfindung liegt die Aufgabe zugrunde, die Einrichtung der eingangs genannten Art so zu verbessern, daß mit einfachen Mitteln, im Vergleich zu der bekannten Einrichtung, das in den Verbrauchern gespeicherte Luftvolumen nicht gänzlich in die Atmosphäre geleitet, sondern teilweise in die Einrichtung zwecks Wiederverwendung zugeführt wird.

Diese Aufgabe wird durch die im Patentanspruch 1 angegebene Erfindung gelöst. Weiterbildungen und vorteilhafte Ausführungsbeispiele sind in den Unteransprüchen angegeben.

Die Erfindung hat den Vorteil, daß durch die Verwendung einer steuerbaren Ventileinrichtung, die eine teilweise Rückführung von Luft von einem Verbraucher in den Kreis mit dem niedrigeren Druck ermöglicht, Energie eingespart wird.

Bei vorteilhaften Ausführungsformen ist die Ventileinrichtung entweder durch eine Feder druckbeaufschlagt oder vom Kreis mit dem niedrigeren Druck steuerbar.

Die Erfindung wird anhand eines Ausführungsbeispiels, das in der Zeichnung dargestellt ist, näher erläutert.

Es zeigen :

Fig. 1 die schematische Darstellung einer Drucklufteinrichtung mit einer Ventileinrichtung mit zwei Steuereingängen,

Figuren 2, 3 und 4 Darstellungen nach Fig. 1 mit einer federbelasteten Ventileinrichtung mit einem Steuereingang.

Die Einrichtung ist dafür vorgesehen, Luft von einem Verbraucher, der in dem Ausführungsbeispiel eine Luftfeder oder ein Bremszylinder ist, entweder in die Drucklufteinrichtung zurückzuführen, oder in die Atmosphäre abzuleiten.

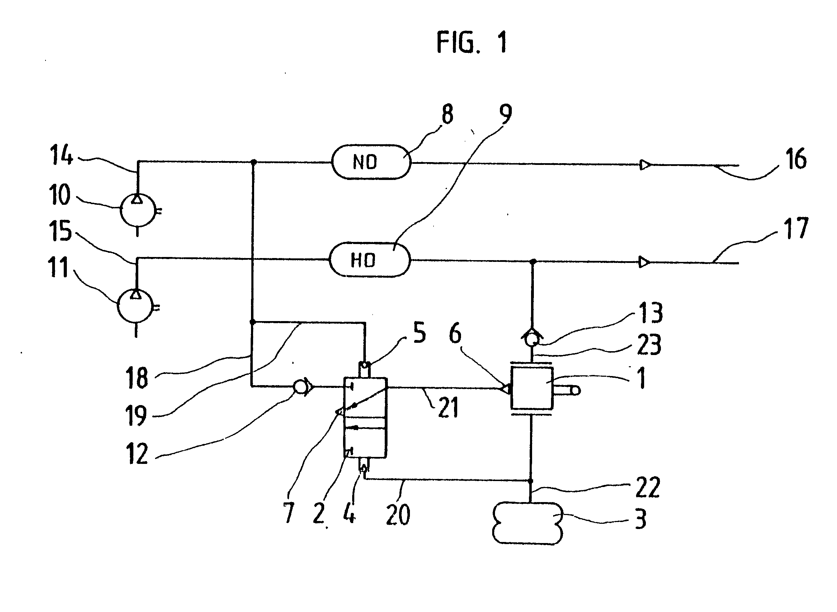

Die Fig. 1 zeigt eine Drucklufteinrichtung mit zwei Kreisen mit unterschiedlichen Drücken. Ein Drucklufterzeuger 10 ist über eine Leitung 14 mit einem Vorratsbehälter 8 verbunden, der dem Kreis mit dem niedrigeren Druck zugeordnet ist. Eine Leitung 16 führt zu nicht dargestellten Verbrauchern, die an den Kreis mit dem niedrigeren Druck angeschlossen sind. Ein Drucklufterzeuger 11 ist über eine Leitung 15 mit einem Vorratsbehälter 9 verbunden, der dem Kreis mit dem höheren Druck zugeordnet ist. Eine Leitung 17 führt zu nicht dargestellten Verbrauchern, die an den Kreis mit dem höheren Druck angeschlossen sind.

Eine erste Ventileinrichtung 1, die ein Luftfederventil ist, ist über eine Leitung 23 mit der Leitung 17 des Hochdruckkreises verbunden. Eine Leitung 22 verbindet das Luftfederventil 1 mit einem Verbraucher 3, der eine Luftfeder ist. In der Leitung 23 ist ein Rückschlagventil 13 angeordnet, das in Strömungsrichtung von der Leitung 17 zum Luftfederventil 1 geöffnet ist und das Luftfedersystem gegen den Hochdruckkreis absichert.

Ein Entlüftungsanschluß 6 des Luftfederventils 1 ist über eine Leitung 21 mit einer zweiten Ventileinrichtung 2 verbunden. Eine Leitung 18 verbindet die Ventileinrichtung 2 mit der Leitung 14 des Niederdruckkreises. In der Leitung 18 ist ein Rückschlagventil 12 angeordnet, das in Strömungsrichtung von der Ventileinrichtung 2 zu der Leitung 14 geöffnet ist und den Niederdruckkreis gegen das Luftfedersystem absichert.

Die Ventileinrichtung 2 hat einen ersten Steuereingang 4, der über eine Leitung 20 mit der zwischen dem Luftfederventil 1 und der Luftfeder 3 angeordneten Leitung 22 verbunden ist. Ein zweiter Steuereingang 5 der Ventileinrichtung 2 ist über eine Leitung 19 mit der an den Niederdruckkreis angeschlossenen Leitung 18 verbunden. Die Ventileinrichtung 2 hat einen Entlüftungsanschluß 7 zur Atmosphäre.

Die Ventileinrichtung 2 hat zwei Schaltstellungen. In einer ersten Schaltstellung ist der Entlüftungsanschluß 6 des Luftfederventils 1 über die Leitung 21 und über den Entlüftungsanschluß 7 mit der Atmosphäre verbunden. In einer zweiten Schaltstellung ist der Entlüftungsanschluß 6 über die Leitung 21 mit der Leitung 18 verbunden.

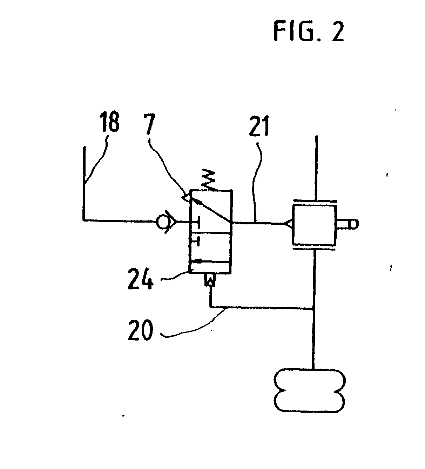

Die Fig. 2 zeigt die gleiche Einrichtung wie Fig. 1, jedoch ist die zweite Ventileinrichtung ein Ventil 24, das anstelle des Steuereingangs 5 der Ventileinrichtung 2 mit einer Druckfeder beaufschlagt ist.

Die Wirkungsweise der Einrichtung ist folgende :

Das Luftfederventil 1 hat neben der neutralen Grundstellung . zwei mechanisch steuerbare Schaltstellungen. In einer ersten Schaltstellung wird die Luftfeder 3 mit der Leitung 17 des Hochdruckkreises verbunden. Über die Leitung 23, das Rückschlagventil 13, das Luftfederventil 1 und die Leitung 22 strömt Luft aus dem Hochdruckkreis in die Luftfeder 3 bis das Luftfederventil 1 die Luftzufuhr unterbricht.

In einer zweiten Schaltstellung des Luftfederventils 1 wird die Luftfeder 3 über die Leitung 22 mit dem Entlüftungsanschluß 6 verbunden. In der Leitung 20, die mit der Leitung 22 verbunden ist, herrscht der in der Luftfeder 3 vorhandene Druck, mit dem der Steuereingang 4 der Ventileinrichtung 2 beaufschlagt ist. Der Steuereingang 5 der Ventileinrichtung 2 ist über die Leitung 19 von dem in dem Niederdruckkreis herrschenden Druck beaufschlagt.

Hat der Druck in der Luftfeder 3 einen vorbestimmten Wert erreicht, der über dem Druck des Niederdruckkreises liegt, dann nimmt die Ventileinrichtung 2 eine Schaltstellung ein, bei der der Entlüftungsanschluß 6 des Luftfederventils 1 über die Leitungen 21 und 18 mit dem Niederdruckkreis verbunden ist. Von der Luftfeder 3 strömt Luft über die Leitung 22, den Entlüftungsanschluß 6, die Leitung 21, die Ventileinrichtung 2; das Rückschlagventil 12 und die Leitung 18 in den Niederdruckkreis.

Hat der Druck in der Luftfeder 3 einen vorbestimmten Druck erreicht, der unter dem Druck des Niederdruckkreises liegt, dann nimmt die Ventileinrichtung 2 eine Schaltstellung ein, bei der der Entlüftungsanschluß 6 des Luftfederventils 1 mit dem Entlüftungsanschluß 7 der Ventileinrichtung 2 verbunden ist. Von der Luftfeder 3 strömt dann Luft über die Leitung 22, den Entlüftungsanschluß 6, die Leitung 21 und den Entlüftungsanschluß 7 in die Atmosphäre.

In einer vorteilhaften Ausführungsform gemäß Fig. 2 wird ein Ventil 24 verwendet, bei dem der niederdruckseitige Steueranschluß durch eine Druckbeaufschlagung durch eine Feder ersetzt ist.

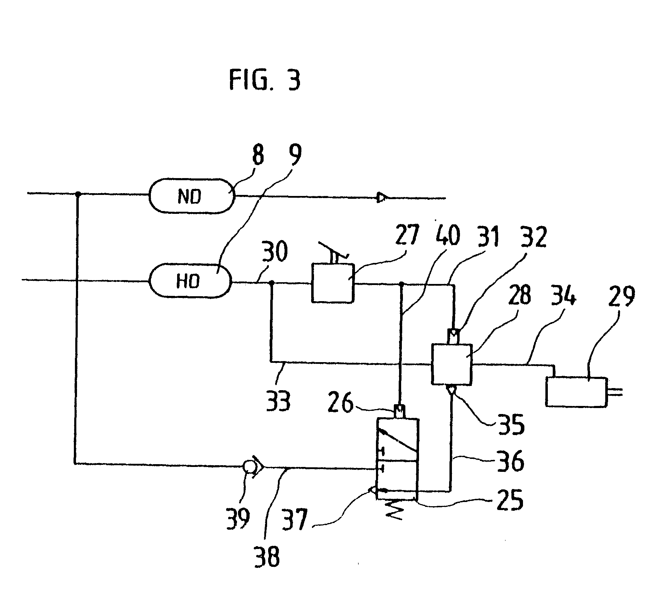

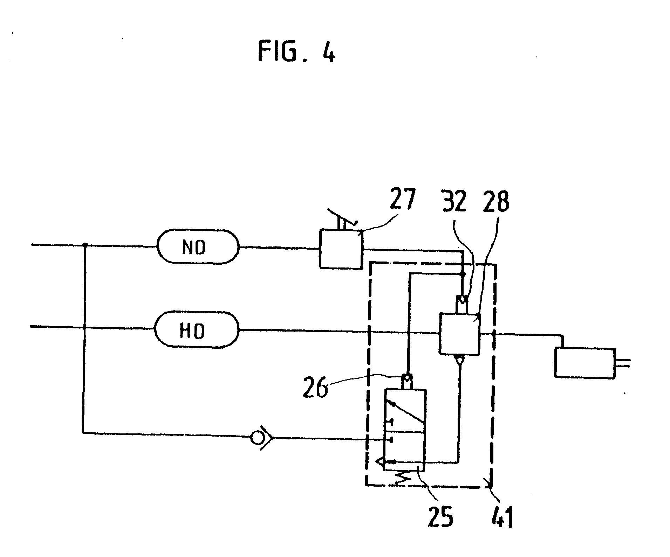

In zwei weiteren vorteilhaften Ausführungsformen gemäß Fig. 3 und Fig. 4 ist ein federbelastetes Ventil 2 mit einem Steueranschluß 26 gezeigt, das der Entlüftung eines Verbrauchers, der ein Bremszylinder 29 ist, dient.

Fig. 3 zeigt eine hochdruckseitig angeordnete Bremseinrichtung mit einem Bremsventil 27, einem Relaisventil 28, dem Bremszylinder 29 und dem Ventil 25. Eine Druckquelle des Hochdruckkreises, dargestellt durch den Luftbehälter 9, ist über eine Leitung 30, das Bremsventil 27, eine Leitung 31 mit einem Steueranschluß 32 des Relaisventils 28 verbunden. Von der Leitung 30 führt eine Leitung 33 über das Relaisventil 28 und eine Leitung 34 zu einem Bremszylinder 29. Das Relaisventil 28 hat einen Luftauslaß 35, der entweder über eine Leitung 36 mit einem Luftauslaß 37 des Ventils 25 oder über das Ventil 25 mit einer Leitung 38, in der sich ein Rückschlagventil 39 befindet, mit dem Niederdruckkreis verbindbar ist. Als Relaisventil 28 kann z. B. ein an sich bekanntes Relaisventil verwendet werden, bei dem zusätzlich der Auslaß zur Atmosphäre so gestaltet ist, daß er mit Druck beaufschlagbar ist. Über eine Leitung 40 ist das Bremsventil 27 mit dem Steueranschluß 26 des Ventils 25 verbunden. Das Ventil 25 ist so eingestellt, daß es bei einem Schaltdruck am Steueranschluß 26, der etwa dem Druck des Niederdruckkreises entspricht, in seine Arbeitsstellung schaltet, wodurch der Luftauslaß 35 über die Leitung 36 mit der Leitung 38 des Niederdruckkreises verbindbar ist. Ein in Strömungsrichtung zum Niederdruckkreis sich öffnendes Rückschlagventil 39 sichert den Bremskreis gegen den Niederdruckkreis ab.

Die Wirkungsweise dieser Einrichtung ist folgende :

Bei einer Betätigung des Bremsventils 27 wird der Steueranschluß 32 beaufschlagt, worauf das Relaisventil 28 eine Förderung von Druckluft aus dem Hochdruckkreis über die Leitungen 33 und 34 in den Zylinder 29 freigibt. Liegt der von dem Ventil 27 ausgesteuerte Druck, der auch an dem Steuereingang 26 ansteht, über dem Druck des Niederdruckkreises, dann schaltet das Ventil 25 in seine Arbeitsstellung, was jedoch keinen Einfluß auf die Funktion der Einrichtung während eines Bremsvorganges hat, da der Luftauslaß 35 geschlossen ist.

Bei einer Entlastung des Bremsventils 27 verschließt das Relaisventil 28 die Leitung 33 und öffnet den Luftauslaß 35. Die von dem Zylinder 29 abströmende Luft wird über die Leitungen 34, 36 und 38 in den Niederdruckkreis geleitet. Sinkt der von dem Bremsventil 27 ausgesteuerte Druck unter das Druckniveau des Niederdruckkreises, dann schaltet das Ventil 25 in seine Grundstellung, wodurch die in dem Zylinder 29 befindliche Restluft über den Luftauslaß 37 in die Atmosphäre abgeleitet wird.

Bei einer schlagartigen Entlastung des Bremsventils 27 fällt schlagartig der an den Steueranschlüssen 32 und 26 anstehende Druck, so daß das gesamte Luftvolumen des Zylinders 29 über den Luftauslaß 37 des Ventils 25 in die Atmosphäre abgeführt wird.

Die Fig. 4 zeigt eine Einrichtung mit der gleichen Wirkungsweise wie die Einrichtung nach Fig. 3, wobei jedoch das Bremsventil 27 sowie die Steueranschlüsse 32 und 26 des Relaisventils 28 und des Ventils 25 dem Niederdruckkreis zugeordnet sind. Dies hat den Vorteil, daß die Steuermechanismen einer geringeren Belastung ausgesetzt sind.

In einer weiteren vorteilhaften Ausführungsform ist das Relaisventil 28 mit dem Ventil 25 zu einer Baueinheit 41 zusammengefaßt.

## Patentansprüche

1. Drucklufteinrichtung mit zwei Kreisen mit unterschiedlichen Drücken, mit einem vom Kreis mit dem höheren Druck über eine erste steuerbare Ventileinrichtung beaufschlagbaren Verbraucher, insbesondere für eine Luftfederanlage oder Druckluftbremsanlage in einem Kraftfahrzeuge, gekennzeichnet durch die folgenden Merkmale :

a) die erste Ventileinrichtung (1) (28) dient zur wahlweisen Verbindung des Verbrauchers (3) (29) mit dem Kreis mit dem höheren Druck oder mit einem Entlüftungsanschluß (6) (35) der ersten Ventileinrichtung (1) (28) ;

b) es ist eine zweite steuerbare Ventileinrichtung (2) (24) (25) vorgesehen, über die der Entlüftungsanschluß (6) (35) an den Kreis mit dem niedrigeren Druck, oder über einen Entlüftungsanschluß (7) (37) der zweiten Ventileinrichtung (2) (24) (25) an die Atmosphäre anschließbar ist.

2. Drucklufteinrichtung nach Anspruch 1, dadurch gekennzeichnet, daß die zweite Ventileinrichtung (2) in Abhängigkeit vom Druck in der Leitung zwischen der ersten Ventileinrichtung (1) und dem Verbraucher (3) und in Abhängigkeit vom Druck in dem Leitungssystem des Kreises mit dem niedrigeren Druck steuerbar ist.

3. Drucklufteinrichtung nach Anspruch 2, gekennzeichnet durch die folgenden Merkmale :

a) die zweite Ventileinrichtung (2) ist pneumatisch steuerbar ;

b) ein erster pneumatischer Steuereingang (4) der zweiten Ventileinrichtung (2) ist mit der Leitung zwischen der ersten Ventileinrichtung (1) und dem Verbraucher (3) verbunden, und ein zweiter pneumatischer Steuereingang (5) der zweiten Ventileinrichtung (2) ist mit dem Leitungssystem des Kreises mit dem niedrigeren Druck verbunden.

4. Drucklufteinrichtung nach Anspruch 2, dadurch gezeichnet, daß die zweite Ventileinrichtung (2) den Entlüftungsanschluß (6) der ersten Ventileinrichtung (1) mit dem Kreis mit dem niedrigeren Druck verbindet, solange der Druck in dem Verbraucher (3) oberhalb eines vorgegebenen Druckes des Kreises mit dem niedrigeren Druck liegt.

5. Drucklufteinrichtung nach Anspruch 1, dadurch gekennzeichnet, daß die zweite Ventileinrichtung (24) in Abhängigkeit vom Druck in dem Verbraucher (3) gegen eine Druckbeaufschlagung durch eine Feder steuerbar ist (Fig. 2).

6. Drucklufteinrichtung nach Anspruch 1, gekennzeichnet durch die folgenden Merkmale :

a) die erste Ventileinrichtung (28) und die zweite Ventileinrichtung (25) sind pneumatisch steuerbar ;

b) die erste Ventileinrichtung (28) und die zweite Ventileinrichtung (25) sind in Abhängigkeit von dem ausgesteuerten Druck eines Bremsventils (27) steuerbar (Fig. 3, 4).

7. Drucklufteinrichtung nach Anspruch 6, gekennzeichnet durch die folgenden Merkmale :

a) die zweite Ventileinrichtung (25) ist in Abhängigkeit vom Druck in einer Leitung zwischen dem Bremsventil (27) und einem pneumatischen Steueranschluß (32) der ersten Ventileinrichtung (28) steuerbar ;

b) ein pneumatischer Steueranschluß (26) der zweiten Ventileinrichtung (25) ist mit der Leitung zwischen dem Bremsventil (27) und dem pneumatischen Steueranschluß (32) der ersten Ventileinrichtung (28) verbunden (Fig. 3, 4).

8. Drucklufteinrichtung nach Anspruch 6, dadurch gekennzeichnet, daß die zweite Ventileinrichtung (25) in Abhängigkeit vom Druck in der Leitung zwischen dem Bremsventil (27) und einem pneumatischen Steueranschluß (32) der ersten Ventileinrichtung (28) gegen eine Druckbeaufschlagung durch eine Feder steuerbar ist (Fig. 3, 4).

9. Drucklufteinrichtung nach Anspruch 6, dadurch gekennzeichnet, daß die zweite Ventileinrichtung (25) den Entlüftungsanschluß (35) der ersten Ventileinrichtung (28) mit dem Kreis mit dem niedrigeren Druck verbindet, solange der von dem Bremsventil (27) ausgesteuerte Druck oberhalb einer vorgegebenen Druckbeaufschlagung durch die Feder der zweiten Ventileinrichtung (25) liegt (Fig. 3, 4).

10. Drucklufteinrichtung nach den Ansprüchen 5 und 8, dadurch gekennzeichnet, daß die Druckbeaufschlagung der zweiten Ventileinrichtung (24) (25) durch eine Feder auf einen vorgegebenen Wert einstellbar ist.

11. Drucklufteinrichtung nach Anspruch 6, gekennzeichnet durch die folgenden Merkmale :

a) das Bremsventil (27) ist entweder mit dem Kreis mit dem höheren Druck oder mit dem Kreis mit dem niedrigeren Druck verbunden ;

b) der Steueranschluß (32) der ersten Ventileinrichtung (28) und der Steueranschluß (26) der zweiten Ventileinrichtung (25) sind durch das Bremsventil (27) von dem Kreis mit dem höheren Druck oder von dem Kreis mit dem niedrigeren Druck ansteuerbar (Fig. 3, 4).

12. Drucklufteinrichtung nach Anspruch 1, dadurch gekennzeichnet, daß die erste Ventileinrichtung (28) und die zweite Ventileinrichtung (25) in einer Baueinheit (41) zusammengefaßt ist.

## Claims

1. Compressed air system with two circuits having different pressures, with a utilisation device that can be acted upon by the circuit having the higher pressure by way of a first controllable valve device, especially for a pneumatic suspension system or a compressed air brake system in a motor vehicle, characterised by the following

features :

a) the first valve device (1) (28) serves to connect the utilisation device (3) (29) selectively with the circuit having the higher pressure or with a venting connection (6) (35) of the first valve device (1) (28) ;

b) a second controllable valve device (2) (24) (25) is provided, by way of which the venting connection (6) (35) can be connected to the circuit having the lower pressure, or by way of a venting connection (7) (37) of the second valve device (2) (24) (25) to the atmosphere.

2. Compressed air system according to Claim 1, characterised in that the second valve device (2) can be controlled in response to the pressure in the line between the first valve device (1) and the utilisation device (3), and in response to the pressure in the line system of the circuit having the lower pressure.

3. Compressed air system according to Claim 2, characterised by the following features :

a) the second valve device (2) is pneumatically controllable ;

b) a first pneumatic control inlet (4) of the second valve device (2) is connected to the line between the first valve device (1) and the utilisation device (3), and a second pneumatic control inlet (5) of the second valve device (2) is connected to the line system of the circuit having the lower pressure.

4. Compressed air system according to Claim 2, characterised in that the second valve device (2) connects the venting connection (6) of the first valve device (1) to the circuit having the lower pressure as long as the pressure in the utilisation device (3) is above a predetermined pressure of the circuit having the lower pressure.

5. Compressed air system according to Claim 1, characterised in that the second valve device (24) can be controlled in response to the pressure in the utilisation device (3) against pressure exerted by a spring (Fig. 2).

6. Compressed air system according to Claim 1, characterised by the following features :

a) the first valve device (28) and the second valve device (25) are pneumatically controllable ;

b) the first valve device (28) and the second valve device (25) can be controlled in response to the controlled pressure of a brake valve (27) (Fig. 3, 4).

7. Compressed air system according to Claim 6, characterised by the following features :

a) the second valve device (25) can be controlled in response to the pressure in a line between the brake valve (27) and a pneumatic control connection (32) of the first valve device (28) ;

b) a pneumatic control connection (26) of the second valve device (25) is connected to the line between the brake valve (27) and the pneumatic control connection (32) of the first valve device (28) (Fig. 3, 4).

8. Compressed air system according to Claim 6, characterised in that the second valve device (25) can be controlled in response to the pressure in the line between the brake valve (27) and a pneumatic control connection (32) of the first valve device (28) against pressure exerted by a spring (Fig. 3, 4).

9. Compressed air system according to Claim 6, characterised in that the second valve device (25) connects the venting connection (35) of the first valve device (28) to the circuit having the lower pressure as long as the pressure controlled by the brake valve (27) is above a predetermined pressure exerted by the spring of the second valve device (25) (Fig. 3, 4).

10. Compressed air system according to Claims 5 and 8, characterised in that the pressure exerted on the second valve device (24) (25) by a spring can be set to a predetermined value.

11. Compressed air system according to Claim 6, characterised by the following features :

a) the brake valve (27) is connected either to the circuit having the higher pressure or to the circuit having the lower pressure ;

b) the control connection (32) of the first valve device (28) and the control connection (26) of the second valve device (25) can be operated by means of the brake valve (27) from the circuit having the higher pressure or from the circuit having the lower pressure (Fig. 3, 4).

12. Compressed air system according to Claim 1, characterised in that the first valve device (28) and the second valve device (25) are combined into one unit (41).

## Revendications

1. Dispositif à air comprimé, à deux circuits ayant des pressions différentes, comportant un organe utilisateur, notamment pour une installation de ressort pneumatique ou une installation de freinage à air comprimé dans un véhicule automobile, cet organe utilisateur étant apte à être attaqué par le circuit à plus haute pression via un dispositif de vanne apte à être commandé, caractérisé par les caractéristiques suivantes :

a) le premier dispositif de vanne (1) (28) sert à relier sélectivement l'organe utilisateur (3) (29) au circuit à plus haute pression ou à un raccord de sortie d'air (6) (35) du premier dispositif de vanne (1) (28) ;

b) il est prévu un deuxième dispositif de vanne (2) (24) (25) pouvant être commandé, par lequel le raccord de sortie d'air (6) (35) peut être raccordé au circuit à plus basse pression ou, via un raccord de sortie d'air (7) (37) du deuxième dispositif de vanne (2) (24) (25), à l'atmosphère.

2. Dispositif à air comprimé selon revendication 1, caractérisé par le fait que le deuxième dispositif de vanne (2) peut être commandé en fonction de la pression dans la conduite entre le premier dispositif de vanne (1) et l'organe utilisateur (3) et en fonction de la pression dans le système de conduites du circuit à plus basse pression.

3. Dispositif à air comprimé selon revendication 2, caractérisé par les caractéristiques suivantes :

a) le deuxième dispositif de vanne (2) peut être commandé pneumatiquement ;

b) une première entrée de commande pneumatique (4) du deuxième dispositif de vanne (2) est reliée à la conduite entre le premier dispositif de vanne (1) et l'organe utilisateur (3), et une deuxième entrée de commande pneumatique (5) du deuxième dispositif de vanne (2) est reliée au système de conduites du circuit à plus basse pression.

4. Dispositif à air comprimé selon revendication 2, caractérisé par le fait que le deuxième dispositif de vanne (2) relie le raccord de sortie d'air (6) du premier dispositif de vanne (1) au circuit à plus basse pression, cela tant que la pression dans l'organe utilisateur (3) est supérieure à une pression prédéterminée du circuit à plus basse pression.

5. Dispositif à air comprimé selon revendication 1, caractérisé par le fait que le deuxième dispositif de vanne (24) peut être commandé en fonction de la pression dans l'organe utilisateur (3), contre une sollicitation de poussée fournie par un ressort (figure 2).

6. Dispositif à air comprimé selon revendication 1, caractérisé par les caractéristiques suivantes :

a) le premier dispositif de vanne (28) et le deuxième dispositif de vanne (25) peuvent être commandés pneumatiquement ;

b) le premier dispositif de vanne (28) et le deuxième dispositif de vanne (25) peuvent être commandés en fonction de la pression émise par une vanne de frein (27) (figures 3, 4).

7. Dispositif à air comprimé selon revendication 6, caractérisé par les caractéristiques suivantes :

a) le deuxième dispositif de vanne (25) peut être commandé en fonction de la pression dans une conduite entre la vanne de frein (27) et un raccord de commande pneumatique (32) du premier dispositif de vanne (28) ;

b) un raccord de commande pneumatique (26) du deuxième dispositif de vanne (25) est relié à la conduite entre la vanne de frein (27) et le raccord de commande pneumatique (32) du premier dispositif de vanne (28) (figures 3, 4).

8. Dispositif à air comprimé selon revendication 6, caractérisé par le fait que le deuxième dispositif de vanne (25) peut être commandé en fonction de la pression dans la conduite entre la vanne de frein (27) et un raccord de commande pneumatique (32) du premier dispositif de vanne (28), contre une sollicitation de pression de ressort (figures 3, 4).

9. Dispositif à air comprimé selon revendication 6, caractérisé par le fait que le deuxième dispositif de vanne (25) relie le raccord de sortie d'air (35) du premier dispositif de vanne (28) au circuit ayant la plus basse pression, tant que la pression émise par la vanne de frein (27) est supérieure à une sollicitation de pression prédéterminée fournie par le ressort du deuxième dispositif de vanne (25) (figures 3, 4).

10. Dispositif à air comprimé selon revendications 5 et 8, caractérisé par le fait que la sollicitation de pression du deuxième dispositif de vanne (24) (25) est réglable à une valeur prédéterminée, au moyen d'un ressort.

11. Dispositif à air comprimé selon revendication 6, caractérisé par les caractéristiques suivantes :

a) la vanne de frein (27) est reliée soit au circuit à plus haute pression soit au circuit à plus basse pression ;

b) le raccord de commande (32) du premier dispositif de vanne (28) et le raccord de commande (26) du deuxième dispositif de vanne (25) peuvent être attaqués au moyen de la vanne de frein (27), depuis le circuit à plus haute pression ou depuis le circuit à plus basse pression (figures 3, 4).

12. Dispositif à air comprimé selon revendication 1, caractérisé par le fait que le premier dispositif de vanne (28) et le deuxième dispositif de vanne (25) sont regroupés en une unité modulaire (41).

FIG. 1

FIG. 2

FIG. 3

## FIG. 4